# EUROPEAN PATENT APPLICATION

(11) **EP 1 684 246 A1**
(43) Date of publication of application: **26.07.2006**
(21) Application number: 06001145.9
(22) Date of filing: 19.01.2006
(51) Int. Cl.: G07F 17/32

(54) **Gaming machine**

(30) Priority: 21.01.2005 JP 2005013995; 21.01.2005 JP 2005013996
(71) Applicant: Aruze Corp., Tokyo 135-0063 (JP)
(72) Inventor: Okada, Kazuo, Tokyo 135-0063 (JP)
(74) Representative: Grünecker, Kinkeldey, Stockmair & Schwanhäusser Anwaltssozietät

(57) **Abstract**

A gaming machine has a cabinet which is mounted with a control panel. On the control panel, switching means connected to a game control means are arranged. The gaming machine further includes: a movement mechanism which enables the control panel to move relative to the cabinet; a blocking means which blocks movement of the control panel through the movement mechanism; and an unlocking means which unlocks the blocking by the blocking means against movement of the control panel, when a credit value stored in the credit value memory is not less than one and no game is in progress.

## Description

### BACKGROUND OF THE INVENTION

### 1. Field of the Invention

The present invention relates to a gaming machine having a movable control panel.

### 2. Description of Related Art

For the purpose of providing a player with improved usability, it is desired that a control panel of a gaming machine can be moved so as to be easily used by a player. Known are a technique for opening and closing an electric panel of an in-vehicle audio equipment (see Japanese Patent Unexamined Publication No. 2003-72477), a technique for adjusting an angle of a key input portion of an automatic cash transaction machine (see Japanese Patent Unexamined Publication No. 2002-32833), a technique for moving an armrest (see Japanese Patent Unexamined Publication No. 2000-254349), etc., and it may be possible to apply these technique to a control panel of a gaming machine.

### SUMMARY OF THE INVENTION

A control panel of a gaming machine is continuously used during a game. Accordingly, a control panel, which is moved to a position where a player can easily use it prior to playing a game, needs to be fixed in order not to hinder a game operation during the game. However, an electric panel of an in-vehicle audio equipment, a key input portion of an automatic cash transaction machine, and an armrest are different from a control panel in that they need not to be fixed. Therefore, application of the aforementioned techniques to a control panel can hinder a game operation, because the control panel is not fixed even during a game.

An object of the present invention is to provide a gaming machine having a control panel which can be moved without hindering a game operation.

According to an aspect of the present invention, there is provided a gaming machine comprising a game medium detecting means, a credit value memory, a storage means, a game control means, a plurality of switching means, a control panel, and a cabinet. The game medium detecting means outputs a detection signal upon detection of a game medium which is served as a charge for a game. The credit value memory stores a credit value which is calculated out by adding a predetermined value in accordance with a detection signal outputted from the game medium detecting means and at the same time subtracting a predetermined value when a game is started. The storage means stores a game program. The game control means controls progress of a game based on the game program stored in the storage means. The plurality of switching means are connected to the game control means. On the control panel, the plurality of switching means are arranged. The cabinet is mounted with the control panel. The gaming machine further comprises a movement mechanism, a blocking means, and an unlocking means. The movement mechanism enables the control panel to move relative to the cabinet. The blocking means blocks movement of the control panel through the movement mechanism. The unlocking means unlocks the blocking by the blocking means against movement of the control panel, when a credit value stored in the credit value memory is not less than one and no game is in progress.

In this aspect, the control panel can be moved only when a credit value is not less than one and no game is in progress, and during a game the blocking means makes the control panel immovable. Thus, the control panel can be moved into a position desirable for a player without hindering a game operation.
BRIEF DESCRIPTION OF THE DRAWINGS
Other and further objects, features and advantages of the invention will appear more fully from the following description taken in connection with the accompanying drawings in which:
FIG. 1 is a perspective view of a slot machine according to a first embodiment of a gaming machine of the present invention;
FIG. 2 is a perspective view of the slot machine illustrated in FIG. 1, having its slide table fully housed in a cabinet;
FIG. 3 is a local sectional view showing the slide table and a slide mechanism that enables the slide table to slide relative to the cabinet;
FIG. 4 is a local sectional view in a state where the slide table illustrated in FIG. 3 is fully housed in the cabinet;
FIG. 5 is a plan view of a control panel that is provided on the slide table;
FIG. 6 is a block diagram showing a control unit of the slot machine;
FIG. 7 is a block diagram showing a liquid-crystal drive circuit of a display;
FIG. 8 is an explanatory diagram showing columns of symbols, which are variably displayed on video reels during a base game;
FIG. 9 is an explanatory diagram showing winning combinations and payout numbers therefor;
FIG. 10 shows stop areas of five video reels;
FIG. 11 is a flowchart of a main processing which is executed by the slot machine;
FIG. 12 is a flowchart of a starting processing S11 which is included in the main processing of FIG. 11;
FIG. 13 is a flowchart of a lottery processing S12 which is included in the main processing of FIG. 11;
FIG. 14 is a flowchart of a base game processing S13 which is included in the main processing of FIG. 11;
FIG. 15 is a flowchart of a bonus game processing S15 which is included in the main processing of FIG. 11;
FIG. 16 is a perspective view of a slot machine according to a second embodiment of a gaming machine of the present invention;
FIGS. 17 and 18 are side views showing a slide mechanism capable of sliding a control panel relative to a cabinet interlockingly with changing an angle of a main display;
FIG. 19 is a side view showing a control panel and a main display both placed in a default state;
FIG. 20 is a block diagram of a control unit of the slot machine according to the second embodiment;
FIG. 21 is a flowchart of a starting processing of the second embodiment;
FIG. 22 is a flowchart of a temporary storage processing S63 which is included in the starting processing of FIG. 21;
FIG. 23 is a flowchart of an adjustment processing S64 which is included in the starting processing of FIG. 21; and
FIG. 24 is a flowchart of a writing processing S66 which is included in the starting processing of FIG. 21.

### DESCRIPTION OF THE PREFERRED EMBODIMENTS

In the following, some preferred embodiments of the present invention will be described with reference to the accompanying drawings.

First will be described a slot machine 1 according to a first embodiment of a gaming machine of the present invention.

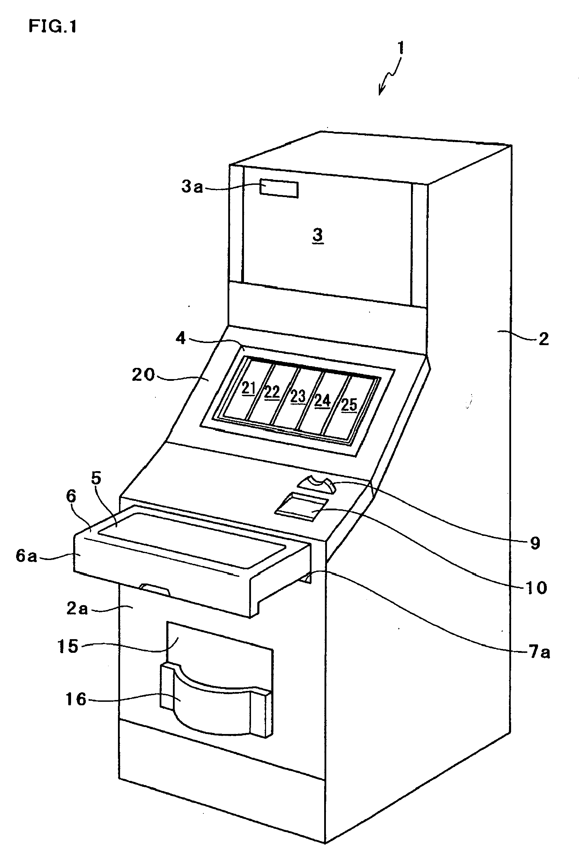

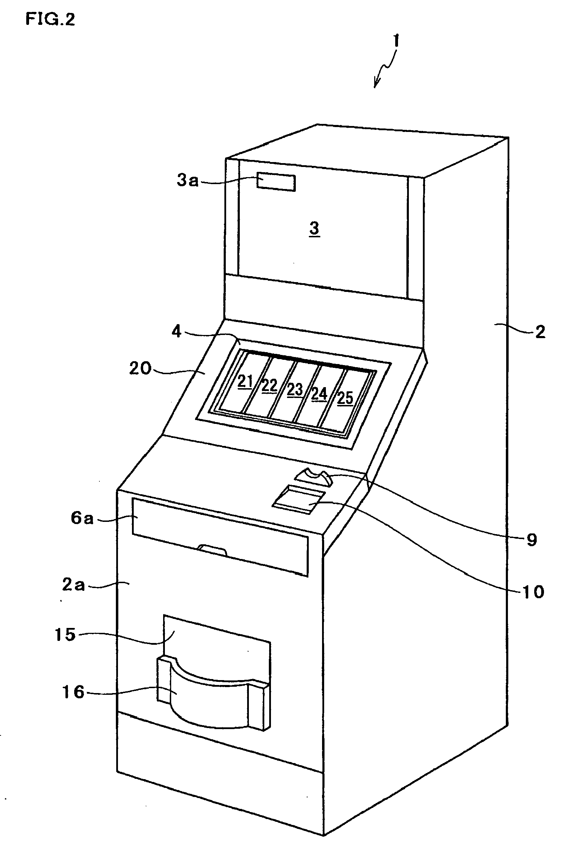

As shown in FIGS. 1 and 2, the slot machine 1 of this embodiment is one with which a player plays a game in a sit-down condition. A sub display 3 is placed in an upper front part of a cabinet 2. A main display 4 is placed on a front panel 20 which locates in a middle front part of the cabinet 2. The sub display 3 and the main display 4 are commonly-used liquid crystal displays. The sub display 3 displays information about a game such as a game method, kinds of winning combination and payout numbers therefor, and various effects. The sub display 3 has, in its upper left part, a credit number display portion 3a which displays a credit number. The main display 4 displays five video reels 21, 22, 23, 24, and 25. The video reels 21 to 25 are scrolled, and in each of the video reels 21 to 25 various kinds of symbols which will be described later are variably displayed from top to bottom. After a predetermined time period, the scrolling of the video reels 21 to 25 stops, so that each of the video reels 21 to 25 displays three symbols.

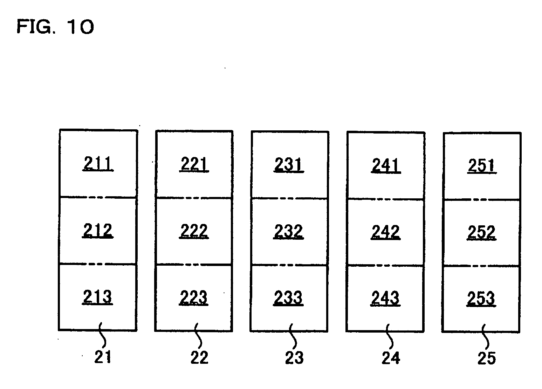

In the slot machine 1, a slot game including a base game and a bonus game, which will be detailed later, is played through the video reels 21 to 25 of the main display 4. As shown in FIG. 10, the video reels 21 to 25 have first stop areas 211, 221, 231, 241, and 251, second stop areas 212, 222, 232, 242 and 252, and third stop areas 213, 223, 233, 243 and 253. When the scrolling_of the video reels 21 to 25 stops, one symbol is displayed in each of the stop areas 211 to 213, 221 to 223, 231 to 233, 241 to 243, and 251 to 253.

A pay line used in the slot game consists of five stop areas including one of the stop areas 211 to 213, one of the stop areas 221 to 223, one of the stop areas 231 to 233, one of the stop areas 241 to 243, and one of the stop areas 251 to 253. In this embodiment, a total of five pay lines are provided, although a description of each pay line will be omitted here. When specific symbols line up on an activated pay line (hereinafter referred to as an activated line) in a specific manner, a payout is awarded.

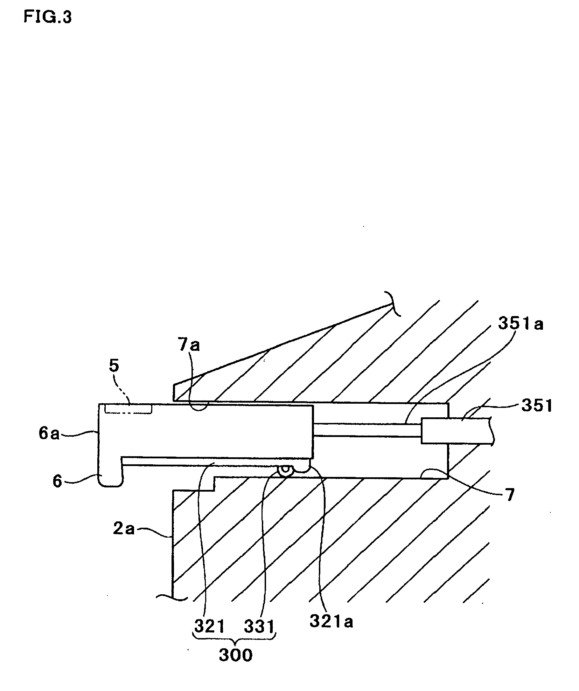

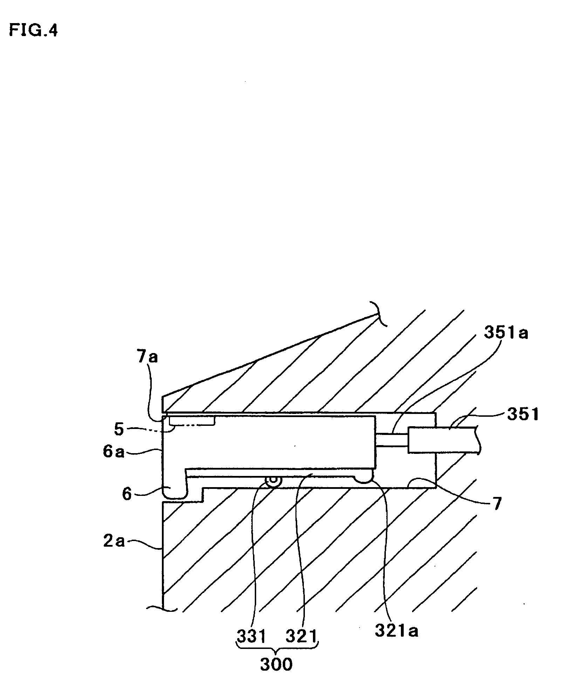

Referring again to FIG. 1, a coin insertion slot 9 and a bill insertion slot 10 are provided below the main display 4. A housing space 7 (see FIGS. 3 and 4) is formed within the cabinet 2, and the housing space 7 has its opening 7a formed in a front face 2a of the cabinet below the bill insertion slot 10. A slide table 6 can be moved into and out of the opening 7a of the housing space 7. When the slide table 6 is fully housed in the housing space 7, the front face 2a of the cabinet and a front face 6a of the slide table align on the same plane as shown in FIG. 2. As shown in FIGS. 3 and 4, disposed in the housing space 7 is a slide mechanism 300 that enables the slide table 6 to slide along a front-back direction of the cabinet 2.

Here, the slide mechanism 300 will be described with reference to FIGS. 3 and 4.

The slide mechanism 300 includes a pair of slide rails 321 and a pair of rollers 331. The pair of slide rails 321 are attached to both widthwise ends of a bottom face of the slide table 6. The pair of rollers 331 are engaged with grooves of the slide rails 321. The rollers 331 are pivotally supported on the cabinet 2. While the slide table 6 is being pulled out of or housed into the housing space 7, the slide rails 321 having their grooves engaged with the rollers 331 are sliding together with rotation of the rollers 331.

The slide rail 321 has a protrusion 321a at its inner-side end. Thus, when the slide table 6 is pulled out, the protrusion 321a and the roller 331 collide against each other as shown in FIG. 3. This prevents the slide table 6 from being excessively pulled out of the housing space 7.

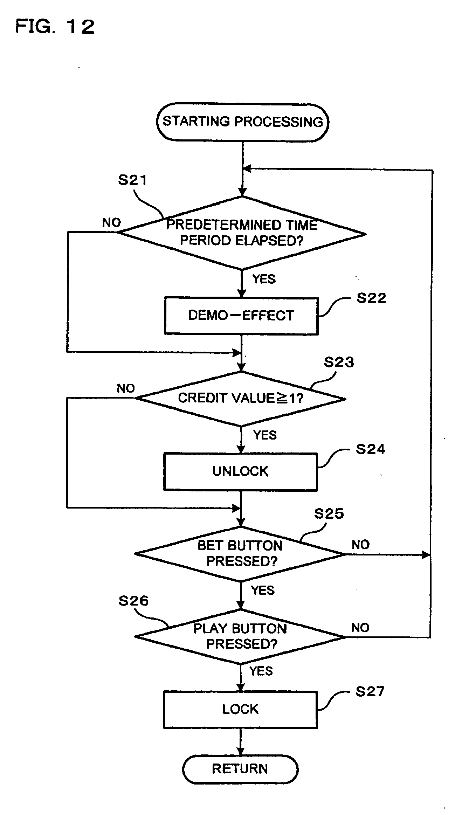

A lock actuator 351 is fixed in the depth of the housing space 7. A rod 351a of the lock actuator 351 has its front end secured to a back face of the slide table 6 which is opposite to the front face 6a thereof. When the rod 351a of the lock actuator 351 is in an extendable/retractable mode, the slide table 6 can be slid. When the rod 351a is fixed against extension and retraction, the slide table 6 cannot be slid. In a later-described starting processing shown in FIG. 12, a CPU 50 determines whether or not the rod 351a of the lock actuator 351 should be brought into the extendable/retractable mode.

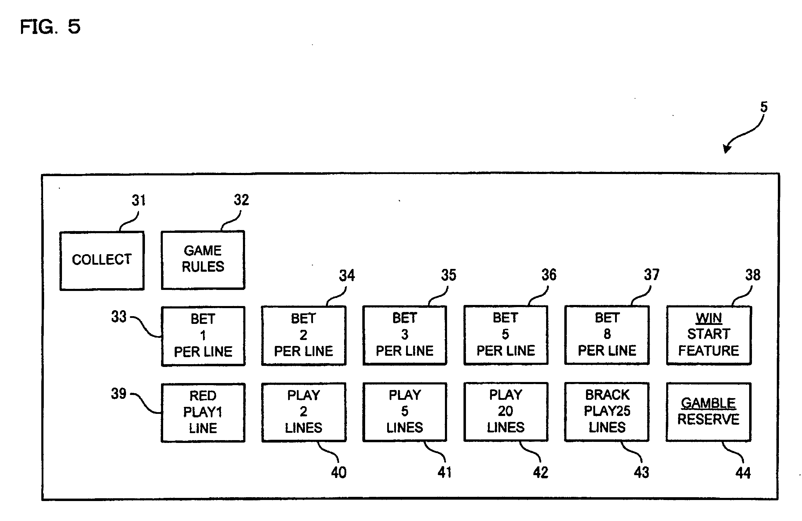

FIG. 5 shows a control panel 5 which is provided on an upper face of the slide table 6. An upper section of the control panel 5 includes a COLLECT button 31 and a GAME RULES button 32 in this order from left to right. A middle section of the control panel 5 includes a BET1 PER LINE button 33, a BET2 PER LINE button 34, a BET3 PER LINE button 35, a BET5 PER LINE button 36, a BET8 PER LINE button 37, and a WIN/START FEATURE button 38 in this order from left to right. A lower section of the control panel 5 includes a RED PLAY1 LINE button 39, a PLAY2 LINES button 40, a PLAY5 LINES button 41, a PLAY20 LINES button 42, a BLACK PLAY25 LINES button 43, and a GAMBLE/RESERVE button 44 in this order from left to right.

The COLLECT button 31 is pressed when a base game ends. When COLLECT button 31 is pressed, coins, the number of which is equivalent to the credit acquired in the game, are paid out through a payout opening 15 into a coin tray 16. The GAME RULES button 32 is pressed when a player does not clearly know how to play a game. When the GAME RULES button 32 is pressed, various help information is displayed on the sub display 3 and/or the main display 4.

The BET 1 PER LINE button 33, the BET2 PER LINE button 34, the BET3 PER LINE button 35, the BET5 PER LINE button 36, and the BET8 PER LINE button 37 are buttons which, upon one press, increase the bet on each activated line by one, two, three, five, and eight, respectively. Accordingly, by pressing any of these BET buttons 33 to 37, the bet value bet on each activated line is determined.

The WIN/START FEATURE button 38 is a button for starting a bonus game and for adding to the credit a payout acquired in a bonus game.

The RED PLAY1 LINE button 39, the PLAY2 LINES button 40, the PLAY5 LINES button 41, the PLAY20 LINES button 42, and the BLACK PLAY25 LINE button 43 are buttons for setting the number of activated lines at one, two, five, twenty, and twenty-five, respectively. Upon a press of any of these buttons 39 to 43, a game is started based on the set bet value and the number of activated lines. Thus, the video reels 21 to 25 of the main display 4 start scrolling.

The RED PLAY1 LINE button 39 and the BLACK PLAY25 LINES button 43 are also used for selecting one of red and black in a double down game. The double down game means a game which is performed by using a credit value acquired in a bonus game.

The GAMBLE/RESERVE button 44 is pressed before a player temporarily leaves a seat, or pressed after a bonus game is finished so that a game shifts to a double down game.

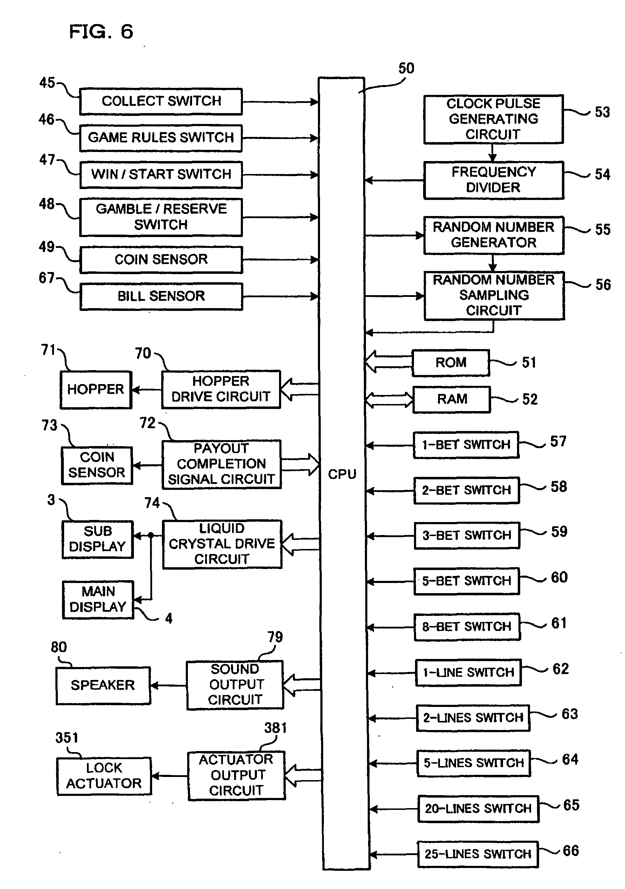

Each of these buttons 31 to 44 has a built-in switch (see FIG. 6). To be more specific, the COLLECT button 31 has a COLLECT switch 45, the GAME RULES button 32 has a GAME RULES switch 46, the BET1 PER LINE button 33 has a 1-BET switch 57, the BET2 PER LINE button 34 has a 2-BET switch 58, the BET3 PER LINE button 35 has a 3-BET switch 59, the BET5 PER LINE button 36 has a 5-BET switch 60, the BET8 PER LINE button 37 has a 8-BET switch 61, the WIN/START FEATURE button 38 has a WIN*START switch 47, the RED PLAY1 LINE button 39 has a 1-LINE switch 62, the PLAY2 LINES button 40 has a 2-LINES switch 63, the PLAY5 LINES button 41 has a 5-LINES switch 64, the PLAY20 LINES button 42 has a 20-LINES switch 65, the BLACK PLAY25 LINES button 43 has a 25-LINES switch 66, and the GAMBLE/RESERVE button 44 has a GAMBLE*RESERVE switch 48. Based on a press of each of the buttons 31 to 44, a corresponding switch outputs a signal to the CPU 50.

A coin sensor 49 is disposed within the cabinet 2 at a position near the coin insertion slot 9. When a coin is inserted into the coin insertion slot 9, the coin sensor 49 outputs a coin detection signal to the CPU 50. A bill sensor 67 is disposed within the cabinet 2 at a position near the bill insertion slot 10. When a bill is inserted into the bill insertion slot 10, the bill sensor 67 outputs a bill detection signal to the CPU 50.

Referring again to FIG. 1, provided in a lower part of the front face 2a of the cabinet 2 are the payout opening 15 and the coin tray 16 that receives a coin paid out through the payout opening 15. A coin sensor 73 is disposed within the cabinet 2 at a position near the payout opening 15, so that the coin sensor 73 detects a coin which is being paid out through the payout opening 15 (see FIG. 6).

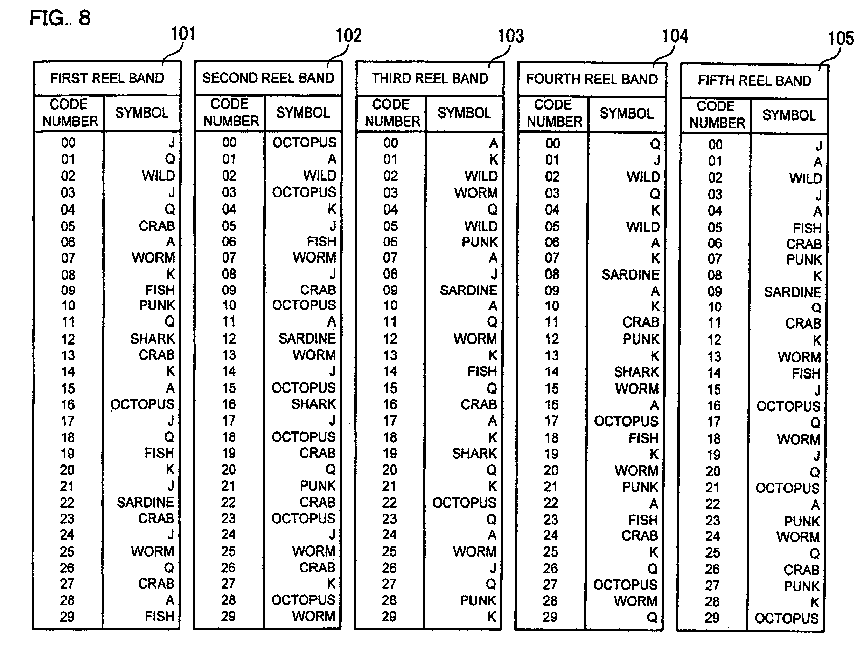

Next, exemplified symbols which are variably displayed in the video reels 21 to 25 will be described with reference to FIG. 8.

A column of symbols on a first reel band 101, a column of symbols on a second reel band 102, a column of symbols on a third reel band 103, a column of symbols on a fourth reel band 104, and a column of symbols on a fifth reel band 105 are variably displayed in the video reels 21, 22, 23, 24, and 25, respectively. The column of symbols on each of the reel bands 101 to 105 includes twelve kinds of symbols, namely, "WILD", "SHARK", "FISH", "PUNK", "OCTOPUS", "CRAB", "WORM", "A", "K", "Q", "J", and "SARDINE". The symbols on the respective reel bands 101 to 105 are arranged differently from one another.

The characters of "SHARK", "FISH", "PUNK", "OCTOPUS", "CRAB", "WORM", and "SARDINE" refer to symbols of a shark, fish, a man with a guitar, a octopus, a crab, a warm, and a sardine, respectively. The characters of "WILD", "A", "K", "Q", and "J" refer to symbols of corresponding alphabets.

The "SARDINE" symbol functions also as a scatter symbol for shifting to a bonus game. When three or more "SARDINE" symbols appear in the stop areas 21 to 25 of the video reels, a shift to a bonus game is allowed regardless of activated lines. The "WILD" symbol can substitute for any of the "SHARK" symbol, "FISH" symbol, "PUNK" symbol, "OCTOPUS" symbol, "CRAB" symbol, "WORM" symbol, "A" symbol, "K" symbol, "Q" symbol, and "J" symbol, but cannot substitute for the "SARDINE" symbol which functions as the scatter symbol.

The columns of symbols on the reel bands 101 to 105 are variably displayed in the respective video reels 21 to 25 for a predetermined time period, and then stopped so that each of the video reels 21 to 25 displays three symbols (see FIG. 10). If a predetermined combination of predetermined symbols appears on an activated line, a winning is made and a payout number corresponding to the combination is added to the credit value. This is the same as in the conventional slot machines, and therefore a specific description thereof will be omitted here.

Next, a control unit of the slot machine 1 will be described with reference to FIG. 6.

As shown in FIG. 6, the control unit of the slot machine 1 includes the CPU 50 as a core, and a ROM 51 and a RAM 52 are connected to the CPU 50. The ROM 51 stores, as will be described later, a main processing program, a base game processing program, a bonus game processing program, a first lottery table used for determining which symbols will be stopped in a base game, a second lottery table used for determining which symbols will be stopped in a bonus game, other programs necessary for controlling the slot machine, a data table, a game program, and the like.

The RAM 52 is a memory for temporarily storing data computed by the CPU 50, such as a credit value. A credit equivalent to the amount of inserted coin/bill and a credit acquired as a payout are added to the credit value stored in the RAM 52, and a bet-out credit is subtracted from the credit value stored in the RAM 52. Data are correspondingly overwritten.

Connected to the CPU 50 are a clock pulse generating circuit 53 that generates a reference clock pulse, a frequency divider 54, a random number generating circuit 55 that generates a random number, and a random number sampling circuit 56. A random number sampled by the random number sampling circuit 56 is used in a lottery for a winning combination, etc.

Also connected to the CPU 50 are the switches that are built in the respective buttons 31 to 44 as described above. Based on signals from the switches, the CPU 50 controls to execute operations corresponding to the respective buttons.

Connected to the CPU 50 are the coin sensor 49 and the bill sensor 67 which are disposed near the coin insertion slot 9 and the bill insertion slot 10, respectively, as described above. Based on a coin detection signal outputted from the coin sensor 49, the CPU 50 computes the number of coins inserted, and adds to the credit a credit value equivalent to the inserted coin(s). Based on a bill detection signal outputted from the bill sensor 67, the CPU 50 adds to the credit a credit value equivalent to the inserted bill(s).

A hopper 71 is connected to the CPU 50 through a hopper drive circuit 70. When the CPU 50 outputs a drive signal to the hopper drive circuit 70, the hopper 71 pays out a predetermined number of coins through the payout opening 15. The coin sensor 73 is also connected to the CPU 50 through a payout completion signal circuit 72. Based on a coin detection signal outputted from the coin sensor 73, the payout completion signal circuit 72 counts the number of coins paid out, and outputs a payout completion signal to the CPU 50 when the counts reaches a predetermined value.

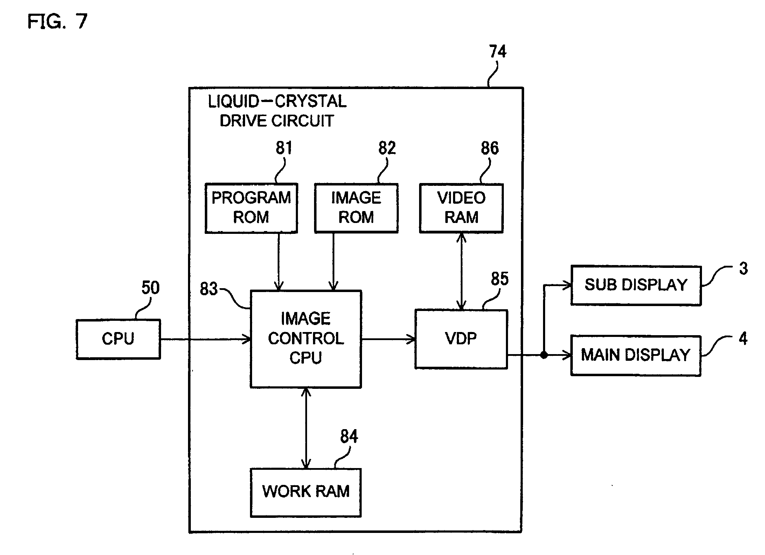

The sub display 3 and the main display 4 are connected to the CPU 50 through a liquid-crystal drive circuit 74. As shown in FIG. 7, the liquid-crystal drive circuit 74 includes a program ROM 81, an image ROM 82, an image control CPU 83, a work RAM 84, a VDP (Video Display Processor) 85, and a video RAM 86. The program ROM 81 stores an image control program and various selection tables relating to displays on the sub display 3 and the main display 4. The image ROM 82 stores dot data for forming images such as columns of symbols on the reel bands 101 to 105 (see FIG. 8) which are displayed in the video reels 21 to 25 of the main display 4, a demonstration image, and the like. Based on a parameter defined by the CPU 50 and in accordance with the image control program prestored in the program ROM 81, the image control CPU 83 determines which image, from the dot data prestored in the image ROM 82, will be displayed on the sub display 3 and the main display 4. The work RAM 84 is a temporary memory that is used when the image control CPU 83 executes the image control program. The VDP 85 forms an image that corresponds to display contents determined by the image control CPU 83, and displays the image on the sub display 3 or the main display 4. Thereby, for example, the columns of symbols on the reel bands 101 to 105 are variably displayed in the video reels 21 to 25 of the main display 4. The video RAM 86 functions as a temporary memory that is used when the VDP 85 forms an image.

A sound output circuit 79 and a speaker 80 are connected to the CPU 50. Based on an output signal from the sound output circuit 79, the speaker 80 produces various sound effects in order to present impressions.

A lock actuator 351 is connected to the CPU 50 through an actuator output circuit 381.

Next, winning combinations, a payout number therefor, etc. will be described.

First, a description will be given to the first lottery table used for determining which symbols will be stopped in a base game.

In the columns of symbols on the respective reel bands 101 to 105, as shown in FIG. 8, code numbers "00" to "29" are assigned to the symbols sequentially from top to bottom. In the first lottery table, each code number is associated with one random number. Five random numbers each corresponding to each of the video reels 21 to 25 are sampled out by the random number sampling circuit 56, and symbols associated with these random numbers are determined to be stopped in the second stop areas 212, 222, 232, 242, and 252 of the respective video reels 21 to 25. Thereby determined are symbols which will be stopped on a first pay line consisting of the second stop areas 212, 222, 232, 242, and 252 of the respective video reels 21 to 25. When symbols which will be stopped in the second stop areas of the respective video reels 21 to 25 are determined, symbols which will be stopped in the other stop areas are inevitably determined based on the arrangements of symbols in the columns shown in FIG. 8.

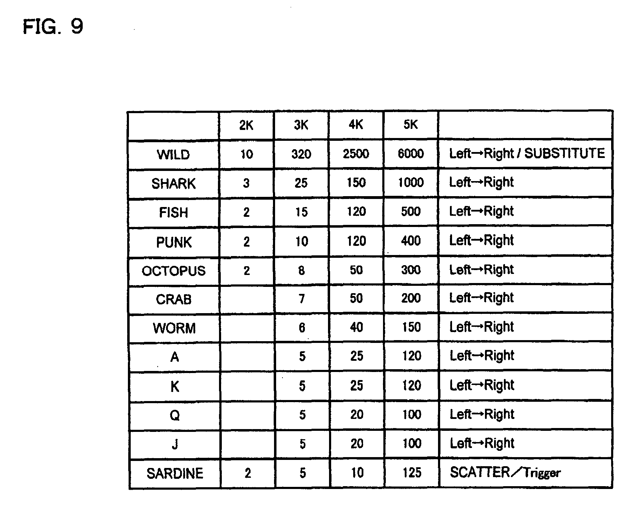

Next, winning combinations and payout numbers therefor in a base game will be described with reference to FIG. 9.

When a bet value is one, payout numbers shown in FIG. 9 are adopted. When a bet value is two or more, values obtained by multiplying the values shown in FIG. 9 by a bet value is added to the credit as payout numbers. With respect to all the symbols except the "SARDINE" symbol, the characters of "xK" (x = 2, 3, 4, 5) in FIG. 9 means "a case where the number of this symbol stopped in series from the leftmost on an activated line is x". With respect to the "SARDINE" symbol, the characters of "xK" (x = 2, 3, 4, 5) in FIG. 9 means "a case where the number of this symbol stopped not only on an activated line but also in any stop areas of the video reels is x".

When the number of "WILD" symbols stopped in series from the leftmost on an activated line is 2, 3, 4, and 5 (in cases of 2k, 3k, 4k, and 5k of FIG. 9), payout numbers of 10, 320, 2500, and 6000, respectively, are given. When the number of "SHARK" symbol stopped in series from the leftmost on an activated line is 2, 3, 4, and 5, payout numbers of 3, 25, 150, and 1000, respectively, are given. In the same manner, when the number of each of the symbols of "FISH", "PUNK", "OCTOPUS", "CRAB", "WORM", "A", "K", "Q", and "J" stopped in series from the leftmost on an activated line is 2, 3, 4, and 5, the payout numbers shown in FIG. 9 are given.

When winning combinations appear on two or more activated lines, a sum total of payouts of the respective winning combinations is added to the credit.

Unlike the other symbols, when the number of "SARDINE" symbol stopped not only on an activated line but also in the stop areas of the video reels 21 to 25 is 2, 3, 4, and 5 (in cases of 2k, 3k, 4k, and 5k of FIG. 9), payout numbers of 2, 5, 10, and 125, respectively are given, and further values obtained by multiplying these payout numbers by a total bet value, i.e., the product of a bet value and the number of activated lines, are added to the credit. At this time, if one or more winning combinations appear in addition to the "SARDINE" symbol(s), the payout number(s) for the winning combination(s) is/are also added to the credit.

When three or more "SARDINE" symbols are stopped in the stop areas of the video reels 21 to 25, the above-described payout number is given and at the same time shift to a bonus game is allowed.

The bonus game means a game which is performed after a base game, and is generally more advantageous to a player. In the bonus game, ten to twenty-five free games are automatically offered without betting any credit.

In the bonus game, similarly to in the base game, the columns of symbols on the reel bands 101 to 105 shown in FIG. 8 are variably displayed in the video reels 21 to 25.

The bet value and the number of activated lines which are used at the time of the shift to the bonus game are still employed in the bonus game. In the bonus game, winning combinations and payout numbers therefor are identical to the above-described ones of the base game. However in the bonus game, the "SHARK" symbol is treated as the "WILD" symbol. In addition, when three or more "SARINE" symbols appear in the stop areas of the video reels 21 to 25, a shift to the bonus game is again allowed. Thereby, a player can relatively easily acquire a large amount of credit.

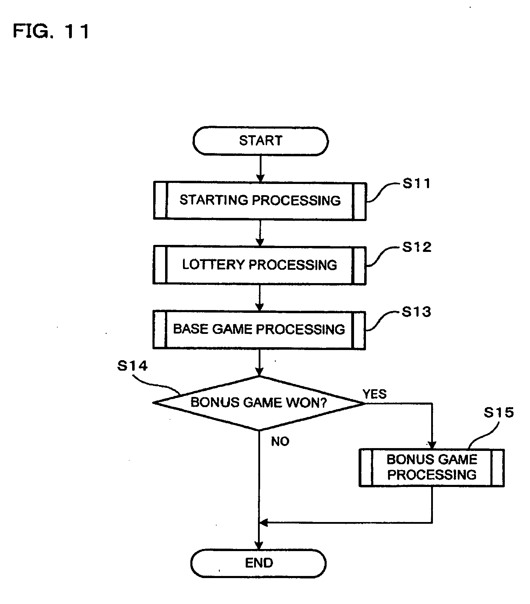

Next, the main processing executed in the slot machine 1 will be described with reference to FIG. 11.

First, in a step (hereinafter abbreviated as "S") 11, a starting processing which will be detailed later (see FIG. 12) is executed. The starting processing is a processing for receiving a coin detection signal from the coin sensor 49 and signals which are outputted from the respective switches upon press of the BET buttons 33 to 37 and the PLAY buttons 39 to 43 of the control panel 5 (see FIG. 5).

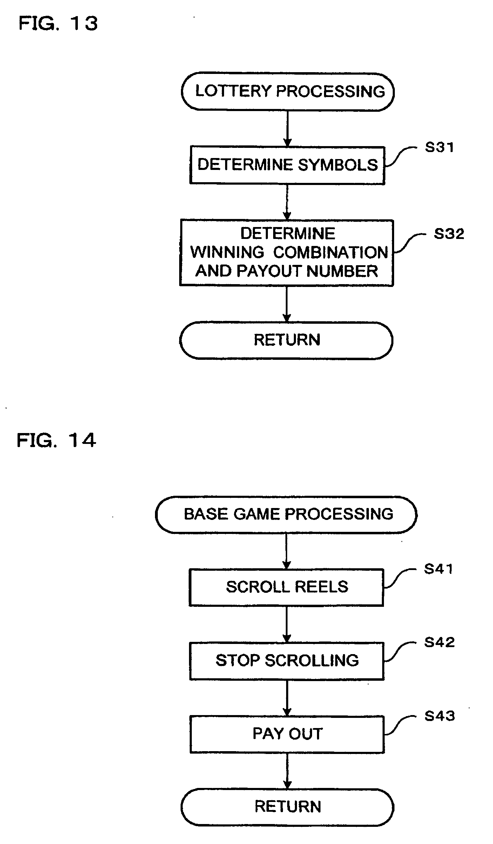

Executed in S12 is a lottery processing for determining which symbols will be stopped in the video reels 21 to 25, etc. (see FIG. 13). If at this time a bonus game is won, the number of free games which can be played in the bonus game is determined to be, for example, one of ten to twenty-five by lottery.

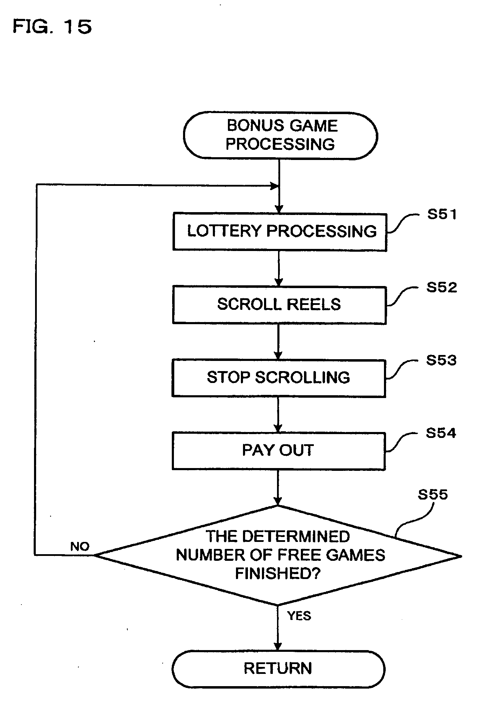

Then, in S13, a base game processing which will be detailed later (see FIG. 14) is executed. Then, in S14, whether a bonus game is won or not is determined. To be more specific, if it has been determined in the lottery processing of S12 that three or more "SARDINE" symbols will be stopped in the stop areas of the video reels 21 to 25, it is determined that a bonus game is won (S14: YES), and the processing proceeds to S15. In S15, a bonus game processing which will be detailed later (see FIG. 15) is executed, and then the main processing ends. If it has been determined in the lottery processing of S12 that three or more "SARDINE" symbols will not be stopped in the stop areas of the video reels 21 to 25, it is determined that a bonus game is not won (S14: NO), and the main processing ends without executing the bonus game processing S15.

Next, the starting processing denoted by "S11" in FIG. 11 will be described with reference to FIG. 12.

First, in S21, whether a predetermined time period, e.g., fifteen seconds has elapsed or not is determined. If it is determined that the predetermined time period has not elapsed (S21: NO), the processing skips S22 and proceeds to S23. If it is determined that the predetermined time period has elapsed (S21: YES), the processing proceeds to S22 where a demonstration image is displayed on the sub display 3 and/or the main display 4, and then proceeds to S23.

In S23, whether a credit value stored in the RAM 52 is not less than one or not is determined. If it is determined that the credit value is less than one (S23: NO), the processings skips S24 and proceeds to S25. If it is determined that the credit value is not less than one (S23: YES), the processings proceeds to S24.

In S24, the CPU 50 outputs an unlock command to the actuator output circuit 381, to unlock the rod 351a of the lock actuator 351 into an extendable/retractable mode. At this time, the CPU 50 functions as an "unlocking means". Thereby, the slide table 6 gets slidable, and a player can place the control panel 5, which is provided on the upper face of the slide table 6, into a desired position.

In S25, whether any of the BET buttons 33 to 37 of the control panel 5 (see FIG. 5) is pressed or not is determined. If it is determined that none of the BET buttons 33 to 37 is pressed (S25: NO), the processing returns to S21 and repeats the above-described steps. If it is determined that any of the BET buttons 33 to 37 is pressed (S25: YES), the processing proceeds to S26.

In S26, whether any of the PLAY buttons 39 to 43 of the control panel 5 (see FIG. 5) is pressed or not is determined. If it is determined that none of the PLAY buttons 39 to 43 is pressed (S26: NO), the processing returns to S21 and repeats the above-described steps. If it is determined that any of the PLAY buttons 39 to 43 is pressed (S26: YES), the processing proceeds to S27.

In S27, the CPU 50 outputs a lock command to the actuator output circuit 381, to lock the rod 351a of the lock actuator 351 against extension and retraction. Thereby, the slide table 6 gets unslidable.

Thereafter, even in the middle of a demo-effect S22, the processing returns to the main processing of FIG. 11 and proceeds to the lottery processing S12.

Next, the lottery processing denoted by "S12" in FIG. 11 will be described with reference to FIG. 13.

First, in S31, which symbols will be stopped in the video reels 21 to 25 in the base game is determined. In this step, as described above, five random numbers each corresponding to each of the video reels 21 to 25 are sampled out by the random number sampling circuit 56, and symbols associated with these random numbers based on the first lottery table are determined to be stopped in the second stop areas of the respective video reels 21 to 25. Symbols which will be stopped in the other stop areas are inevitably determined in accordance with the arrangements of symbols in the columns shown in FIG. 8.

In S32, a winning combination and a payout number therefor are determined based on the table of FIG. 9 as described above. Thereafter, the processing returns to the main processing of FIG. 11 and proceeds to the base game processing S13.

Next, the base game processing denoted by "S13" in FIG. 11 will be described with reference to FIG. 14.

First, in S41, scrolling of the video reels 21 to 25 is started based on a signal transmitted from the switch and received in the starting processing S11 of the main processing of FIG. 11.

In S42, the scrolling of the video reels 21 to 25 is stopped.

In S43, in accordance with the combination of symbols appearing in the video reels 21 to 25 which have been stopped from scrolling in S42, a credit equivalent to the payout determined in the above-described lottery processing S32 (see FIG. 13) is paid out. Then, the processing returns to the main processing of FIG. 11 and proceeds to a determination processing S14.

Next, the bonus game processing denoted by "S15" in FIG. 11 will be described with reference to FIG. 15.

First, in S51, a lottery processing is executed to determine which symbols will be stopped in the video reels 21 to 25, and a winning combination with a payout number therefor. This lottery processing S51 is substantially the same as the lottery processing S12 of the base game, except that the second lottery table replaces the first lottery table which is used for determining symbols in the lottery processing S12.

In S52, scrolling of the video reels 21 to 25 is started.

In S53, the scrolling of the video reels 21 to 25 is stopped.

In S54, in accordance with the combination of symbols appearing in the video reels 21 to 25 which have been stopped from scrolling in S53, a credit equivalent to the payout determined in the lottery processing S51 is paid out.

In S55, whether or not the number of free games played reaches the number determined in the lottery processing S12 of the main processing (see FIG. 11) is determined. If it is determined that the number of free games played does not reach the number determined (S55: NO), the processing returns to S51 and repeat the above-described steps. If it is determined that the number of free games played reaches the number determined (S55: YES), the bonus game processing ends.

If a bonus game is won in S51, the number of free games is newly determined by lottery, to be one of ten to twenty-five for example. The number thus determined is added to "the number determined in the lottery processing S12" which is involved in the judgment of S55. For example, when twenty bonus games are allowed and further seventeen bonus games are won in the twelfth game of those twenty bonus games, the number of free games which can be played thereafter is twenty-five (20-12+17).

If a credit is acquired in the bonus game, a double down game on which this credit is bet is performed after the bonus game, but a specific description thereof will be omitted here.

In the slot machine 1 of this embodiment, as described above, only when a credit value is not less than one (in FIG. 12, S23: YES) and besides no game is in progress, the rod 351a of the lock actuator 351 shown in FIGS. 3 and 4 is unlocked into the extendable/retractable mode (S24), so that the slide table 6 having the control panel 5 mounted thereon becomes movable. If a game is in progress (S26: YES), the rod 351a is locked (S27) and thereby the slide table 6 becomes immovable. Thus, the control panel 5 provided on the slide table 6 can be moved into a position desirable for a player without hindering a game operation. Furthermore, this configuration offers no opportunity for passers-by to make mischief on the control panel 5, for example, to move the control panel.

The control panel 5 is mounted on the slide table 6 which is slidable along a front-back direction of the cabinet 2 by means of the slide mechanism 300. Thereby, a player smoothly slides the slide table 6 in order to place the control panel 5 mounted on the upper face of the slide table 6 into a desired position.

As shown in FIG. 2, when the slide table 6 is fully housed in the housing space 7, the front face 2a of the cabinet and the front face 6a of the slide table align on the same plane. This can improve aesthetic appeal of the appearance. Moreover, the front face 6a of the slide table functions as a door to close the housing space 7 (see FIGS. 3 and 4), thus preventing a foreign matter from getting into the housing space 7.

Next, a description will be given to a slot machine 501 according to a second embodiment of a gaming machine of the present invention. In the following, the same members as those of the slot machine 1 described above will be denoted by the common reference numerals, without a specific description thereof.

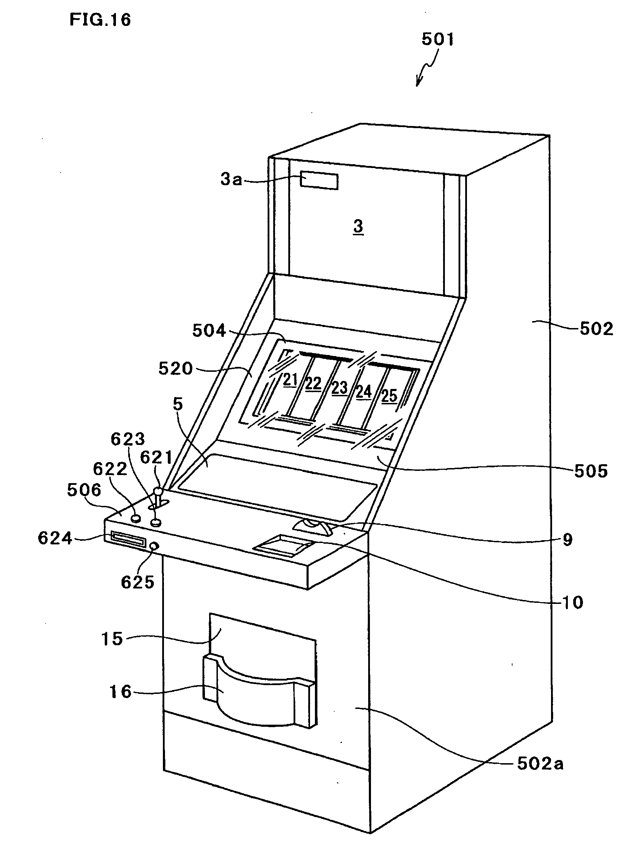

As shown in FIG. 16, a slot machine 501 of the second embodiment has a cabinet 502 a configuration of which is slightly different from that of the slot machine 1 of the first embodiment (see FIG. 1). A front panel 520 locates in a middle front part of the cabinet 502, and has a protective panel 505 that covers a main display 504. In addition, a control panel 5 and an armrest 506 are provided below the main display 504. The armrest 506 protrudes frontward from a front face 502a of the cabinet. A coin insertion slot 9 and a bill insertion slot 10 are provided at a right-side part of an upper face of the armrest 506.

A control lever 621, a temporary storage button 622, and a temporary return button 623 are provided at a left-side part of the upper face of the armrest 506. An insertion slot 624 and a write-in button 625 are provided at a left-side part of a front end-face of the armrest 506.

A player can control the control lever 621, in order to slide the control panel 5 interlockingly with changing an angle of the main display 504. The temporary storage button 622 is a button for temporarily storing in a RAM 52 a position of the control panel 5 and an angle of the main display 504. The temporary return button 623 is a button for adjusting the main display 504 and the control panel 5 respectively to the angle and the position which have been temporarily stored in the RAM 52 by the temporary storage button 622. The insertion slot 624 is a slot into which an ID card of a player is inserted. The write-in button 625 is a button for storing into the ID card the position of the control panel 5 and the angle of the main display 504.

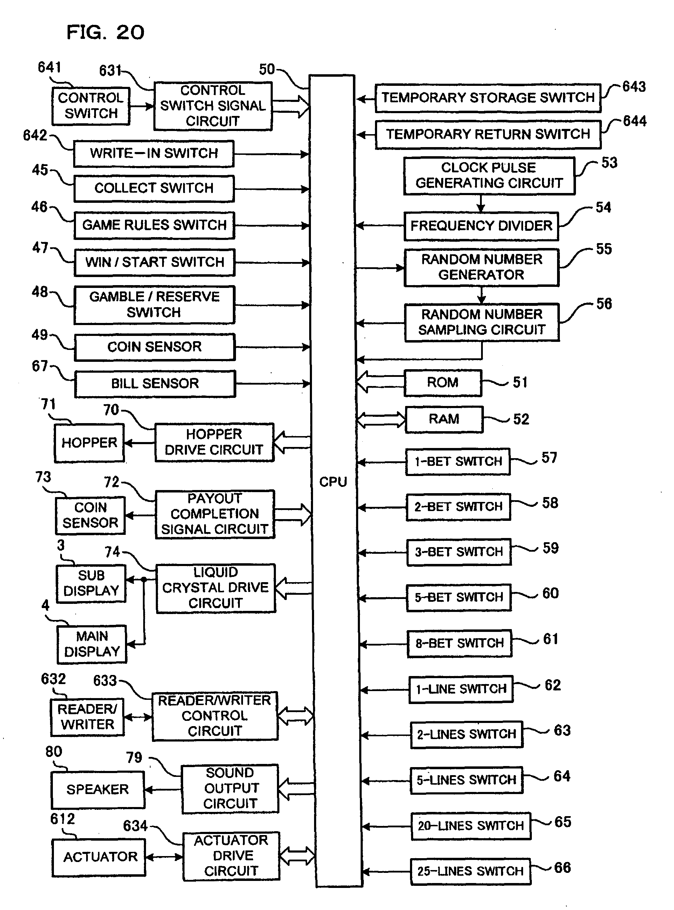

Each of the control lever 621 and the buttons 622, 623, and 625 has a built-in switch (see FIG. 20). More specifically, the control lever 621 has a control switch 641. Based on controlling of the control lever 621, the control switch 641 outputs a control signal to a CPU 50 through a control switch signal circuit 631. The temporary storage button 622 has a temporary storage switch 643, the temporary return button 623 has a temporary return switch 644, and the write-in button 625 has a write-in switch 642. Based on a press of each of the buttons 622, 623, and 625, the corresponding switch outputs a signal to the CPU 50. Based on the signal outputted from the buttons 622, 623, and 625, the CPU 50 controls to execute operations corresponding to the respective buttons. A reader/writer 632 is provided near the insertion slot 624. Through a reader/writer drive circuit 633, the CPU 50 commands the reader/writer 632 to read or write data out of or into the ID card.

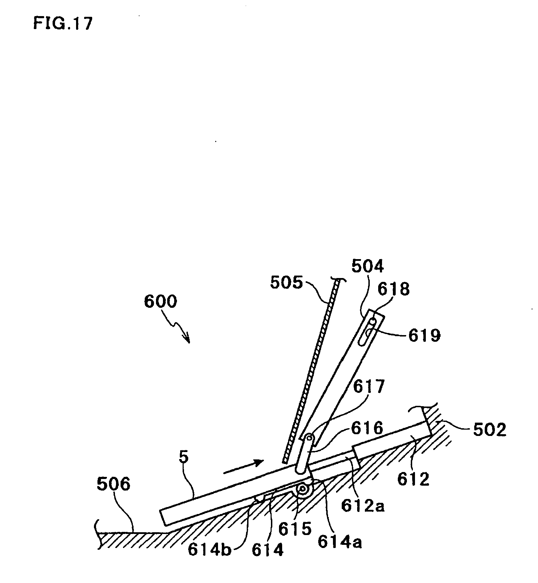

When the control lever 621 is controlled, the control panel 5 slides and at the same time the angle of the main display 504 changes by means of a movement mechanism 600 (see FIGS. 17 to 19).

Here, the movement mechanism 600 will be described with reference to FIGS. 17 to 19.

The movement mechanism 600 includes a pair of slide rails 614 and a pair of rollers 615. The pair of slide rails 614 are attached to both widthwise ends of a bottom face of the control panel 5. The pair of rollers 615 are engaged with grooves of the slide rails 614. The rollers 615 are pivotally supported on the cabinet 502. While the control panel 5 is being moved, the slide rails 614 having their grooves engaged with the rollers 615 are sliding together with rotation of the rollers 615.

The slide rail 614 has protrusions 614a and 614b at its both ends. Thus, the protrusion 614a or 614b collides against the roller 615, to thereby define a range of movement of the control panel 5.

The main display 504 locates on a back side of the protective panel 505. A guide groove 619 is formed in each side face of the main display 504. A protrusion 618 which is fixed to the cabinet 502 is inserted into the guide groove 619. A lower end of the main display 504 is rotatably connected to one end of a link plate 616 with a pivot pin 617. The other end of the link plate 616 is fixed to the control panel 5.

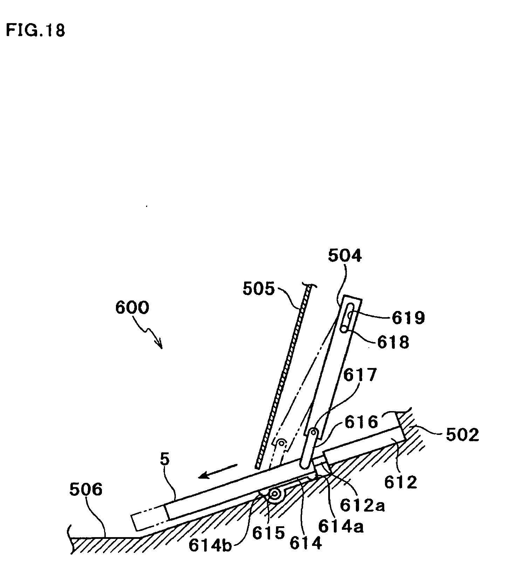

A state shown in FIG. 17 shifts to a state shown in FIG. 18 if the control panel 5 slides along a direction arrowed in FIG. 17 toward the back side of the protective panel 505. In FIG. 18, the control panel 5, the main display 504, the link plate 616, and the pivot pin 617 as positioned in the state of FIG. 17 are illustrated with alternate long and two short dashes lines. Simultaneously with the sliding of the control panel 5 toward the back side of the protective panel 505, an angle of inclination of the main display 504 becomes smaller with respect to the vertical direction.

On the other hand, the state shown in FIG. 18 shifts to the state shown in FIG. 17 if the control panel 5 slides away from the protective plate 505 along a direction arrowed in FIG. 18. Simultaneously with the sliding of the control panel 5 away from the protective panel 505, the angle of inclination of the main display 504 becomes larger with respect to the vertical direction.

Like this, the sliding of the control panel 5 relative to the cabinet 502 and the changing of the angle of the main display 504 with respect to the cabinet 502 are implemented interlockingly.

The movement mechanism 600 further includes an actuator 612 that is provided behind the protective panel 505 and fixed to a surface of the cabinet 502. A rod 612a of the actuator 612 has its front end secured to the control panel 5, so that the control panel 5 slides in association with extension and retraction of the rod 612a.

The extension and retraction of the rod 612a of the actuator 612 depends on a positioning of the control lever 621. More specifically, pushing down the control lever 621 toward the protective panel 505 allows shift from the state shown in FIG. 17 to the state shown in FIG. 18. At this time, the rod 612a is retracted so that the control panel 5 slides toward the back side of the protective panel 505, and simultaneously the main display 504 rises up with its angle getting smaller with respect to the vertical direction.

Pushing down the control lever 621 away from the protective panel 505 allows shift from the state shown in FIG. 18 to the state shown in FIG. 17. At this time, the rod 612a is extended so that the control panel 5 slides away from the protective panel 505, and simultaneously the main display 504 lies down with its angle getting larger with respect to the vertical direction.

Placing the control lever 621 into a vertical state, i.e., into its home position fixes the rod 612a so that the position of the control panel 5 and the angle of the main display 504 are fixed.

As shown in FIG. 20, the actuator 612 is connected to the CPU 50 through an actuator drive circuit 634. When, based on controlling of the control lever 621, the control switch 641 outputs a control signal through the control switch signal circuit 631 to the CPU 50, the CPU 50 outputs a drive signal to the actuator drive circuit 634 so that the actuator drive circuit 634 outputs a step signal, etc., to the actuator 612. The actuator 612 receives the step signal, etc., and extends or retracts the rod 612a to a corresponding extent in a corresponding direction. Operation of the actuator 612 is fed back to the actuator drive circuit 634, or alternatively managed by the actuator drive circuit 634 using a step signal, etc. Thereby, the CPU 50 can monitor the driving of the actuator 612 through the actuator drive circuit 634.

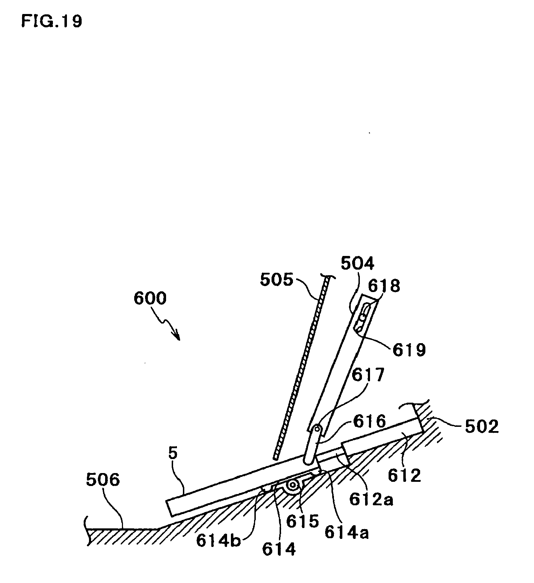

When the slot game ends, the CPU 50 extends or retracts the rod 612a of the actuator 612 in order to return the control panel 5 and the main display 504 into their default state shown in FIG. 19. The position of the control panel 5 in this state and the angle of the main display 504 in this state will hereinafter be referred to as a default position and a default angle, respectively.

Next, processings executed in the slot machine 501 will be described. A main processing executed in the slot machine 501 is the same as that of the first embodiment shown in FIG. 11 except for a starting processing.

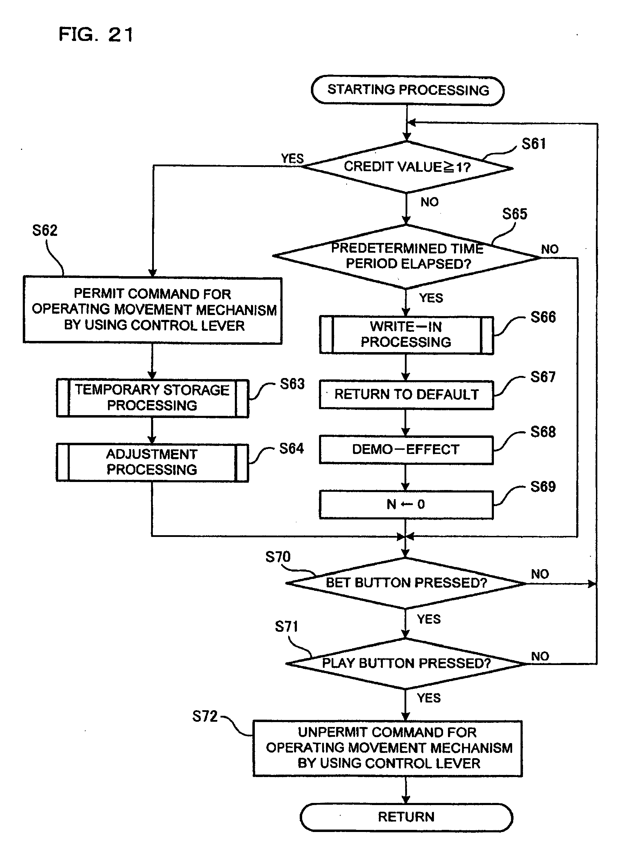

A starting processing executed in the slot machine 501 will be described with reference to FIG. 21.

First, in S61, whether a credit value stored in the RAM 52 is not less than one or not is determined. If it is determined that the credit value stored in the RAM 52 is not less than one (S61: YES), the processing proceeds to S62.

In S62, a command for operation of the movement mechanism 300 by using the control lever 621 is permitted. The CPU 50 receives an operation signal transmitted from the operation switch 641 through the operation switch signal circuit 631. At this time, the CPU 50 functions as an "unlocking means". Based on the control signal, the CPU 50 calculates in which direction and to which extent the rod 612a of the actuator 612 should extend or retract, and outputs to the actuator drive circuit 634 a drive signal for signaling that the rod 612a should be extended or retracted based on data thus calculated. This extension or retraction of the rod 612a causes, in an interlocking manner, the control panel 5 to slide and the main display 504 to change in angle.

Then, a temporary storage processing is executed in S63, an adjustment processing is executed in S64, and the processing proceeds to S70. The temporary storage processing and the adjustment processing will be detailed later.

If it is determined in S61 that the credit value stored in the RAM 52 is less than one (S61: NO), whether a predetermined time period, e.g., fifteen seconds has elapsed or not is determined in S65. If it is determined that the predetermined time period has not elapsed (S65: NO), the processing skips S66 to S69 and proceeds to S70. If it is determined that the predetermined time period has elapsed (S65: YES), a write-in processing is executed in S66. The write-in processing will be detailed later.

In S67, a return to default is executed. At this time, the CPU 50 functions as a "returning means". The CPU 50 operates the actuator 612 through the actuator drive circuit 634, to return the control panel 5 and the main display 504 to the default state shown in FIG. 19.

In S68, a demonstration image is displayed on the sub display 3 and/or the main display 4. At this time, the CPU 50 functions as an "image control means". In S69, "zero" is substituted for a variable N stored in the RAM 52.

In S70, similarly to in S25 of FIG. 12, whether any of BET buttons 33 to 37 of the control panel 5 (see FIG. 5) is pressed or not is determined. If it is determined that none of the BET buttons 33 to 37 is pressed (S70: NO), the processing returns to S61 and repeats the above-described steps. If it is determined that any of the BET buttons 33 to 37 is pressed (S70: YES), the processing proceeds to S71.

In S71, similarly to in S26 of FIG. 12, whether any of PLAY buttons 39 to 43 of the control panel 5 (see FIG. 5) is pressed or not is determined. If it is determined that none of the PLAY buttons 39 to 43 is pressed (S71: NO), the processing returns to S61 and repeats the above-described steps. If it is determined that any of the PLAY buttons 39 to 43 is pressed (S71: YES), the processing proceeds to S72.

In S72, a command for operation of the movement mechanism 300 by using the control lever 621 is unpermitted. The CPU 50 ignores an operation signal transmitted from the operation switch 641 through the operation switch signal circuit 631. At this time, the CPU 50 functions as a "blocking means". The CPU 50 outputs to the actuator drive circuit 634 no drive signal or alternatively a drive signal for signaling that the rod 612a of the actuator 612 should be neither extended nor retracted. Under this state, even if a player tries operating the control lever 621, the rod 612a of the actuator 612 is kept fixed without extension or retraction, and accordingly the control panel 5 and the main display 504 are also kept fixed. Therefore, the position of the control panel 5 and the angle of the main display 504 cannot be adjusted.

Thereafter, even in the middle of a demo-effect S68, the processing returns to the main processing (see FIG. 11) and proceeds to the lottery processing S12.

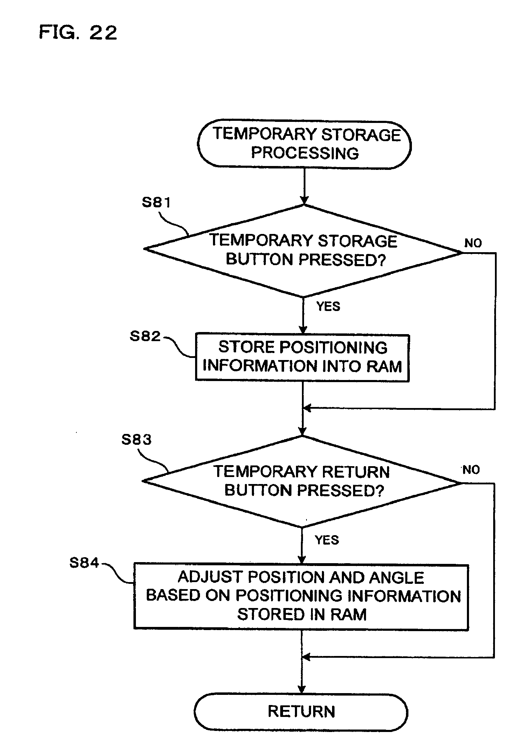

Next, the temporary storage processing denoted by "S63" in FIG. 21 will be described with reference to FIG. 22.

First, in S81, whether the temporary storage button 622 is pressed or not is determined. If it is determined that the temporary storage button 622 is not pressed (S81: NO), the processing skips S82 and proceeds to S83. If it is determined that the temporary storage button 622 is pressed (S81: YES), the processing proceeds to S82.

In S82, the position of the control panel 5 and the angle of the main display 504 under the current state are calculated out based on the extent of extension or retraction of the rod 612a of the actuator 612, and are stored in the RAM 52 as positioning information.

In S83, whether the temporary return button 623 is pressed or not is determined. If it is determined that the temporary return button 623 is not pressed (S83: NO), S84 is skipped and the temporary storage processing ends. Then, the processing returns to the starting processing of FIG. 21, and proceeds to S64. If it is determined that the temporary return button 623 is pressed (S83: YES), the processing proceeds to S84.

In S84, the position of the control panel 5 and the angle of the main display 504 are adjusted based on positioning information stored in the RAM 52 in S82. The CPU 50 outputs to the actuator drive circuit 634 a drive signal for operating the actuator 612 to make the rod 612a protrude by a length corresponding to the positioning information stored in the RAM 52. This extension or retraction of the rod 612a causes, in an interlocking manner, the control panel 5 to slide and the main display 504 to change in angle, so that the control panel 5 and the main display 504 are brought into the same positions as they were when the temporary storage button 622 was pressed.

Thereafter, the processing exits from the temporary storage processing, returns to the starting processing of FIG. 21, and proceeds to S64.

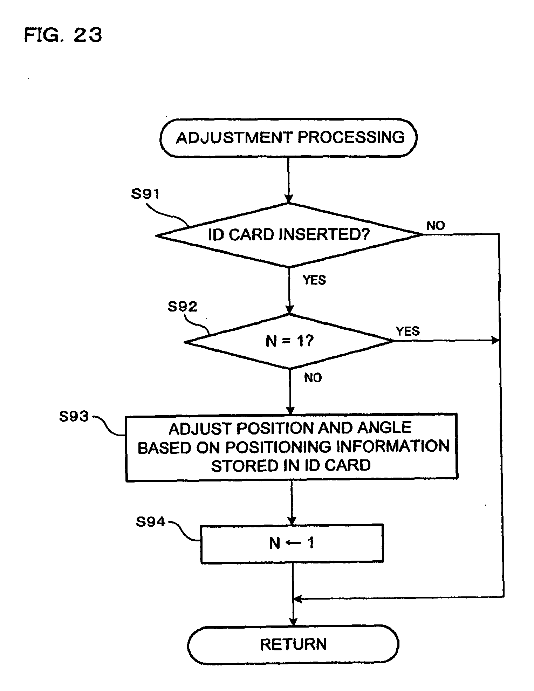

Next, the adjustment processing denoted by "S64" in FIG. 21 will be described with reference to FIG. 23.

First, in S91, whether an ID card is inserted into the insertion slot 624 or not is determined. If a signal is outputted to the CPU 50 from the reader/writer 632 provided near the insertion slot 624, it is determined that an ID card is inserted into the insertion slot 624. If it is determined that an ID card is not inserted into the insertion slot 624 (S91: NO), the processing skips subsequent steps which will be described later and exits from the adjustment processing. Then, the processing returns to the starting processing of FIG. 21, and proceeds to S70.

If it is determined that an ID card is inserted into the insertion slot 624 (S91: YES), the processing proceeds to S92 where whether the variable N stored in the RAM 52 is "one" or not is determined. If it is determined that the variable N is not "one" (S92: NO), the processing proceeds to S93.

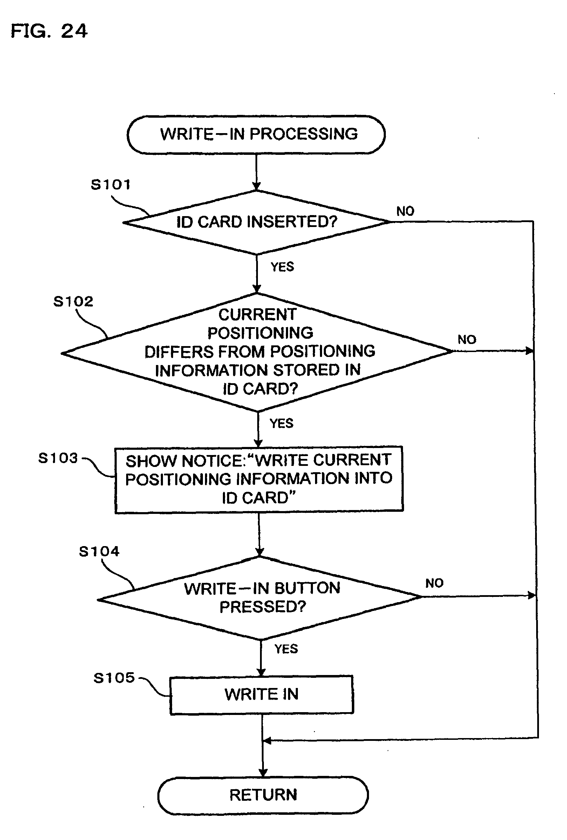

In S93, the position of the control panel 5 and the angle of the main display 504 are adjusted based on positioning information which is stored in the ID card in the later-described write-in processing (see FIG. 24). The CPU 50 reads, using the reader/writer 632 through a reader/writer control circuit 633, positioning information stored in the ID card. Then, the CPU 50 operates the actuator 612 through the actuator drive circuit 634, to make the rod 612a protrude by a length corresponding to the positioning information stored in the ID card. This extension or retraction of the rod 612a causes, in an interlocking manner, the control panel 5 to slide and the main display 504 to change in angle, so that the control panel 5 and the main display 504 are brought into positions corresponding to data stored in the ID card of a player.

In S94, "one" is substituted for the variable N stored in the RAM 52. That is, "the variable N = one" means that the control panel 5 and the display 504 have been adjusted based on the positioning information stored in the ID card. Then, the processing exits from the adjustment processing, returns to the starting processing of FIG. 21, and proceeds to S70.

If it is determined in S92 that the variable N is one (S92: YES), which means that the control panel 5 and the display 504 have been adjusted based on the positioning information stored in the ID card as described above, the processing exits from the adjustment processing without executing S93 and S94 for the purpose of avoiding repetitive adjustments, then returns to the starting processing of FIG. 21, and proceeds to S70.

Next, the write-in processing denoted by "S66" in FIG. 21 will be described with reference to FIG. 24.

First, in S101, whether an ID card is inserted into the insertion slot 624 or not is determined. At this time, similarly to in S91, if a signal is outputted to the CPU 50 from the reader/writer 632 provided near the insertion slot 624, it is determined that an ID card is inserted into the insertion slot 624. If it is determined that an ID card is inserted into the insertion slot 624 (S101: YES), the processing proceeds to S102.

In S102, determined is whether the position of control panel 5 and the angle of the main display 504 under the current state are different from positioning information stored in the ID card. The CPU 50 on one hand reads, by means of the reader/writer 632 through the reader/writer control circuit 633, positioning information stored in the ID card, and on the other hand searches for a protruding length of the rod 612a of the actuator 612 under the current state by means of the actuator drive circuit 334. Then, based on the protruding length of the rod 612a, the CPU obtains data about the position of the control panel 5 and the angle of the main display 504. The judgment is made using the data thus obtained.

If it is determined at this time that the position of control panel 5 and the angle of the main display 504 under the current state are different from the positioning information stored in the ID card (S102: YES), the processing proceeds to S103 where a notice "write the position of the control panel 5 and the angle of the main display 504 under the current state into the ID card?" is shown to a player. Here, the sub display 3 displays the above notice, and also a notice "For writing, press the write-in button 625 within a predetermined time period, e.g., fifteen seconds".

Subsequently, in S104, whether the write-in button 625 is pressed within the predetermined time period or not is determined. If it is determined that the write-in button 625 is pressed within the predetermined time period (S104: YES), the processing proceeds to S105.

In S105, the CPU 50 outputs a drive signal to the reader/writer control circuit 633 to thereby make the reader/writer 632 write into the ID card the position of the control panel 5 and the angle of the main display 504 under the current state.

Then, the processing exits from the write-in processing, returns to the starting processing of FIG. 21, and proceeds to S67. Then, if, after "zero" is substituted for the variable N in S69 of FIG. 21, the processing proceeds to the above-described adjustment processing S64 (see FIG. 23), the NO judgment is made in S92 and therefore an adjustment based on the positioning information stored in the ID card is performed in S93.

In the write-in processing, if the NO judgment is made in any of S101, S102, and S104, the processing skips the subsequent steps, returns to the starting processing of FIG. 21, and proceeds to S67.

In the slot machine 501 of this embodiment, as described above, only when a credit value is not less than one (in FIG. 21, S61: YES) and besides no game is in progress, a command for operation of the movement mechanism 300 by using the control lever 621 is permitted (S62), so that the control panel 5 becomes movable. During a game (S71: YES), a command for operation of the movement mechanism 300 by using the control lever 621 is unpermitted (S72), so that the control panel 5 becomes immovable. Thereby, the control panel 5 can be moved into a position desirable for a player without hindering a game operation.

Since the position of the control panel 5 can be adjusted by means of the control lever 621 which can be controlled by a player, the player can relatively easily perform an operation involved in adjustment of the position of the control panel 5.

This embodiment provides the movement mechanism 600 capable of sliding the control panel 5 relative to the cabinet 502 interlockingly with changing the angle of the main display 504. Upon elapse of a predetermined time period after a slot game ends, the control panel 5 and the main display 504 return to their default state shown in FIG. 19 (S67). In a gaming place where many slot machines 501 are placed, therefore, all the slot machines 501 in which no game is being played have a uniform appearance because positions of their control panels 5 and angles of their main displays are identical. This can improve aesthetic appeal of appearance.

Moreover, in the middle of the demo-effect (S68) which follows the return to default (S67), the demonstration image is displayed on the main display 501 whose angle is in the default state. If the main display 501 under the default state is set at such an angle that a display image can be clearly seen by passers-by, the passers-by can see the demonstration image without difficulty.

Upon a press of the temporary storage button 622, a position of the control panel 5 and an angle of the main display 504 are stored in the RAM 52 (S81 and S82 in FIG. 22). Thereafter, upon a press of the temporary return button 623, the position of the control panel 5 and the angle of the main display 504 are adjusted based on the positioning information stored in RAM 52 in S82. That is, once a favorite position is stored, readjustment using the control lever 621 is conveniently unnecessary.

If the write-in button 625 is pressed with an ID card being inserted into the insertion slot 624, the position of the control panel 5 and the angle of the main display 504 under the current state are written into the ID card as positioning information (S104 and S105 in FIG. 24). By inserting the ID card having the positioning information thus written therein into the insertion slot 624 again, the same position of the control panel 5 and the same angle of the main display 504 as they were at the time of writing into the card can be reproduced (S91 to S93 in FIG. 23). Accordingly, the same effect as described above is obtained, that is to say, once a favorite position is stored, readjustment using the control lever 621 is conveniently unnecessary.

In addition, if it is determined that the position of the control panel 5 and the angle of the main display 504 under the current state are different from positioning information stored in an ID card, the notice "write the position of the control panel 5 and the angle of the main display 504 under the current state into the ID card?" is shown to a player (S102 and S103 in FIG. 24). If the player presses the write-in button 625, the position of the control panel 5 and the angle of the main display 504 under the current state are stored in the ID card as positioning information (S104 and S105) Data stored in the ID card can be overwritten in this manner, and therefore a player can determine the position of the control panel 5 and the angle of the main display 504 depending on his/her preference which may frequently change.

As a driving source of the movement mechanism 600, the slot machine 501 of the second embodiment employs the actuator 612, but other drive sources such as a stepping motor, etc., may be employed instead.

It is also acceptable that the position of the control panel 5 and the angle of the main display 504 are electrically controlled independently of each other, and are operated interlockingly with each other.

Positioning information may be stored not in the ID card but in an external terminal, so that adjustment is performed based on the positioning information outputted from the external terminal.

In S82 of FIG. 22 and S102 of FIG. 24, the position of the control panel 5 and the angle of the main display 504 are calculated out based on the extent of extension or retraction of the rod 612a. However, this is not limitative. For example, these position and angle may be measured by a sensor or the like. In this case, in S84 of FIG. 22 and S93 of FIG. 23, the adjustment processing may be performed by means of a feedback control using the sensor.

In S103, the notice may not always be shown on the display, but may be audially notified through the speaker 80 or through both the display and the speaker. Alternatively, it may be notified to a player through other media.

In S26 of the starting processing of the first embodiment (see FIG. 12) and in S71 of the starting processing of the second embodiment (see FIG. 21), whether a game is started or not is determined based on the press of the PLAY buttons 39 to 43 of the control panel 5. However, it may be determined based on other input signals.

The gaming machine of the present invention is not limited to one for a sitting player, but may be one for standing player.

In the gaming machine of the present invention, a video slot game is played with five reels. However, a video slot game with three or nine reels may also be played. In addition, the gaming machine of the present invention is applicable not only to slot machine adopting video reels but also to a slot machine adopting mechanical reels, and further may be applicable to a hybrid-type slot machine adopting both video reels and mechanical reels.

The gaming machine of the present invention may be any machine which offers a game other than a slot game, e.g., a card game, a shooting game, etc. Besides, the present invention can be applied to an in-aircraft TV or the like which can thereby be changed in angle.

While this invention has been described in conjunction with the specific embodiments outlined above, it is evident that many alternatives, modifications and variations will be apparent to those skilled in the art. Accordingly, the preferred embodiments of the invention as set forth above are intended to be illustrative, not limiting. Various changes may be made without departing from the spirit and scope of the invention as defined in the following claims.

## Claims

1. A gaming machine comprising:
a game medium detecting means that outputs a detection signal upon detection of a game medium which is served as a charge for a game;
a credit value memory that stores a credit value which is calculated out by adding a predetermined value in accordance with a detection signal outputted from the game medium detecting means and at the same time subtracting a predetermined value when a game is started;
a storage means that stores a game program;
a game control means that controls progress of a game based on the game program stored in the storage means;
a plurality of switching means that are connected to the game control means;
a control panel on which the plurality of switching means are arranged; and
a cabinet that is mounted with the control panel,
**characterized in that** the gaming machine further comprises:
a movement mechanism that enables the control panel to move relative to the cabinet;
a blocking means that blocks movement of the control panel through the movement mechanism; and
an unlocking means that, when a credit value stored in the credit value memory is not less than one and no game is in progress, unlocks the blocking by the blocking means against movement of the control panel.

2. The gaming machine according to claim 1, **characterized in that** the movement mechanism enables the control panel to slide.

3. The gaming machine according to claim 2, **characterized in that**:
the cabinet has a housing space that opens in a face of the cabinet confronting a player;
the control panel is mounted on a slide table that can be housed into and pulled out of the housing space; and
when the slide table is housed in the housing space, the face of the cabinet where the housing space opens and an end face of the slide table align on the same plane.

4. The gaming machine according to any one of claims 1 to 3, **characterized in that**:
the gaming machine further comprises an operating means that can be operated by a player and commands an operation of the movement mechanism;
the blocking means unpermits a command for operation of the movement mechanism by using the operating means; and
the unlocking means permits a command for operation of the movement mechanism by using the operating means.

5. The gaming machine according to any one of claims 1 to 4, **characterized in that** the gaming machine further comprises:
a display device that is mounted on the cabinet;
an interlocking mechanism that, interlockingly with movement of the control panel relative to the cabinet, can change an angle of the display device with respect to the cabinet;
an image control means that, when a game ends with a credit value stored in the credit value memory being zero, displays a demonstration image on the display device; and
a returning means that, when a game ends with a credit value stored in the credit value memory being zero, returns the control panel to a default position through the movement mechanism and returns the display device to a default angle through the interlocking mechanism.

6. The gaming machine according to claim 5, **characterized in that** the gaming machine further comprises:
a reader that reads out positioning information stored in an external memory medium which is inserted into an insertion slot formed in the cabinet; and
an adjustment means that, based on the positioning information read out by the reader, adjusts a position of the control panel through the movement mechanism and adjusts an angle of the display device through the interlocking mechanism.

7. The gaming machine according to claim 6, **characterized in that** the gaming machine further comprises:
a notice means that, when a game ends with a credit value stored in the credit value memory being zero and when at least one of the position of the control panel and the angle of the display device is different from the positioning information read out by the reader, shows to a player a notice asking whether any of the position of the control panel and the angle of the display device which is different from the positioning information is to be stored or not;
a writer that writes any of the position of the control panel and the angle of the display device which is different from the positioning information, into the external memory medium which is inserted into the insertion slot; and
a writer-operation commanding means that can be operated by a player and commands an operation of the writer.

8. The gaming machine according to any one of claims 5 to 7, **characterized in that** the gaming machine further comprises:
a memory;
a memory-storage commanding means that can be operated by a player and commands that a current position of the control panel be stored in the memory as positioning information; and
a mechanism-operation commanding means that can be operated by a player and commands that the position of the control panel be adjusted through the movement mechanism and the angle of the display device be adjusted through the interlocking means based on the positioning information stored in the memory.
